# EUROPEAN PATENT APPLICATION

(11) **EP 4 686 610 A1**
(43) Date of publication of application: **04.02.2026**
(21) Application number: 25185281.0
(22) Date of filing: 25.06.2025
(51) Int. Cl.: B60R 3/00, B60P 3/38, B60R 9/055, E04H 15/16

(54) **HARDSHELL COLLAPSIBLE MOBILE STRUCTURE**

(30) Priority: 30.07.2024 US 202463677280 P; 17.01.2025 US 202519030655
(71) Applicant: Roofspace GmbH, 28832 Achim (DE)
(72) Inventor: HEIDER, Jakob, 28832 Achim (DE); SCHNEIDER, Immanuel, 28832 Achim (DE)
(74) Representative: Meissner Bolte Partnerschaft mbB

(57) **Abstract**

An adjustable mobile structure system including an outer hardshell (102) having two halves connected on a first side by at least one support hinge (104), a handle on a second side opposite the first side, the handle having a cross-sectional shape defined by a perimeter with two parallel sides and a cross-sectional width having an outward facing curve; and a removable ladder apparatus (202) having a locking mechanism affixed to a distal end of the removable ladder apparatus (202), the locking mechanism configured to secure a connection between the removable ladder apparatus (202) and the handle, where the locking mechanism includes at least two members, each member having a shape to form a circular interior cavity capable of matching a curvature of the handle.

## Description

### CROSS-REFERENCE TO RELATED APPLICATIONS

This application claims the benefit, and priority benefit, of U.S. Provisional Patent Application Ser. No. 63/677,280, titled "HARDSHELL COLLAPSIBLE MOBILE STRUCTURE," the disclosure of which is incorporated by reference herein in its entirety.

### STATEMENT REGARDING FEDERALLY SPONSORED RESEARCH OR DEVELOPMENT

Not applicable.

### BACKGROUND

A roof tent, also known as rooftop tent, is a type of camping tent that is designed to be mounted on the roof of a vehicle. It provides an elevated sleeping area that can be deployed and packed away. Typically, the roof tent may be installed on the roof rack or roof bars of a vehicle and include a fold-out or pop-up structure that unfolds like a clamshell or pop up vertically or horizontally. Most roof tents require the use of a ladder to either open or assist an individual with entering the elevated sleeping area.

### BRIEF DESCRIPTION OF THE DRAWINGS

The features, and advantages of the disclosure will be apparent from the following description of embodiments as illustrated in the accompanying drawings, in which reference characters refer to the same parts throughout the various views. The drawings are not necessarily to scale, emphasis instead being placed upon illustrating principles of the disclosure:
- FIG. 1: is a depiction of an example configuration within which the systems and methods disclosed herein could be implemented according to some embodiments of the present disclosure.
- FIG. 2: is a depiction of an adjustable mobile structure in an open position of an exemplary system according to some embodiments of the present disclosure.
- FIG. 3: illustrates an exemplary gasket and interior flange associated with a sealing profile of an adjustable mobile structure, according to some embodiments of the present disclosure.
- FIG. 4: illustrates a cross-sectional view of a sealing profile within an adjustable mobile structure, according to some embodiments of the present disclosure.
- FIG. 5: illustrates a cross-sectional view of an interior cable configuration within an adjustable mobile structure, according to some embodiments of the present disclosure.
- FIG. 6: illustrates a support hinge connected to an endcap and an outer hardshell of an adjustable mobile structure in a partially open position, according to some embodiments of the present disclosure.
- FIG. 7: illustrates a support hinge connected to an endcap and an outer hardshell of an adjustable mobile structure in a fully open position, according to some embodiments of the present disclosure.
- FIG. 8A-8C: illustrate a gas spring in three positions, according to some embodiments of the present disclosure.
- FIG. 9: illustrates an endpoint of the interior cable configuration within an adjustable mobile structure, according to some embodiments of the present disclosure.
- FIG. 10: illustrates the internal flange configuration, in accordance with one or more embodiments of the present disclosure.
- FIG. 11: illustrates a support beam associated with an interior cable configuration, in accordance with one or more embodiments of the present disclosure.
- FIG. 12: illustrates a plurality of support beams associated with an interior cable configuration, in accordance with one or more embodiments of the present disclosure.
- FIG. 13: illustrates a plurality of support beams connected to a gas spring, in accordance with one or more embodiments of the present disclosure.
- FIG. 14: illustrates a cross-sectional view of the gas spring housed within the outer hardshell, in accordance with one or more embodiments of the present disclosure.
- FIG. 15: illustrates an alternate cross-sectional view of the gas spring, in accordance with one or more embodiments of the present disclosure.
- FIG. 16: illustrates a securing mechanism between the endcap and the outer hardshell, in accordance with one or more embodiments of the present disclosure.
- FIG. 17: illustrates an alternate view of an outer hardshell of the adjustable mobile structure, in accordance with one or more embodiments of the present disclosure.
- FIG. 18: illustrates an adjustable mobile structure in an open position, in accordance with one or more embodiments of the present disclosure.
- FIG. 19: illustrates a door on the adjustable mobile structure in an open position, in accordance with one or more embodiments of the present disclosure.
- FIG. 20: illustrates an alternative view of an adjustable mobile structure with an attached ladder apparatus, in accordance with one or more embodiments of the present disclosure.
- FIG. 21: illustrates an adjustable mobile structure with an additional flap, in accordance with one or more embodiments of the present disclosure.
- FIG. 22: illustrates an alternate view of an endcap, in accordance with one or more embodiments of the present disclosure.
- FIG. 23: illustrates an exemplary ladder apparatus attached to an affixed handle via a locking mechanism, in accordance with one or more embodiments of the present disclosure.
- FIG. 24: illustrates an exemplary locking mechanism encapsulating a handle affixed to an adjustable mobile structure, in accordance with one or more embodiments of the present disclosure.

### DETAILED DESCRIPTION OF EXAMPLE EMBODIMENTS

The disclosed systems and apparatus provide a framework that is configured to provide an adjustable structure with a shell capable of providing support to the structure while preventing moisture during storage; an exemplary gas spring capable of providing pneumatic support during initiation of the structure, where the gas spring is located in a specific configuration within the structure; and an interior cable connecting the exemplary gas spring to the shell via a honeycomb support structure.

According to some embodiments, adjustable structures can be mounted to vehicles, utilizing a part of the vehicle for additional support of the adjustable structure. This facilitates the initiation of the structure and provides additional weight distribution to increase stability of the adjustable structure. For example, the parts of the vehicle may include a roof and/or a truck bed.

However, with the weight of the outer shell and internal materials for a floor and fabric to form a roof of the adjustable structure, using the interior cable configuration may alleviate the amount of force being directed onto the structure of the vehicle. Typically, adjustable or collapsible mobile structures are either soft shell, where the soft shell provides little to no weight support and fail to prevent the material of the structure from becoming wet; or hard shell, where the hard shell requires multiple individuals to initiate and set up the mobile structure due to weight.

The disclosed systems and methods provide an adjustable mobile structure (i.e., mobile collapsible tent) that can prevent moisture migration via an outer hardshell and automatically initiate via an exemplary gas spring. As discussed in more detail below, the disclosed adjustable mobile structure can be opened and set up by a single individual and closed by the single individual, with the use of the gas spring providing pneumatic support when opening and cushioning (i.e., force dampening) when closing, and being located at an angle perpendicular to an axis of rotation (e.g., opening to a full 180 degrees from 0 degrees and 45 degrees) of the adjustable mobile structure in a fully open position. The disclosed adjustable mobile structure can utilize the outer hardshell to provide protection to the fabric material used in the adjustable mobile structure, while being constructed of a particular material that maintains a minimal weight and does not add to the downward force into the vehicle structure during the use of the adjustable mobile structure (e.g., the outer hardshell folds in a configuration that provides additional support to the vehicle structure). In some embodiments, the adjustable mobile structure provides additional support to the vehicle structure by distributing downward force evenly across the entire roof rack and/or outer hardshell versus directly on the vehicle structure.

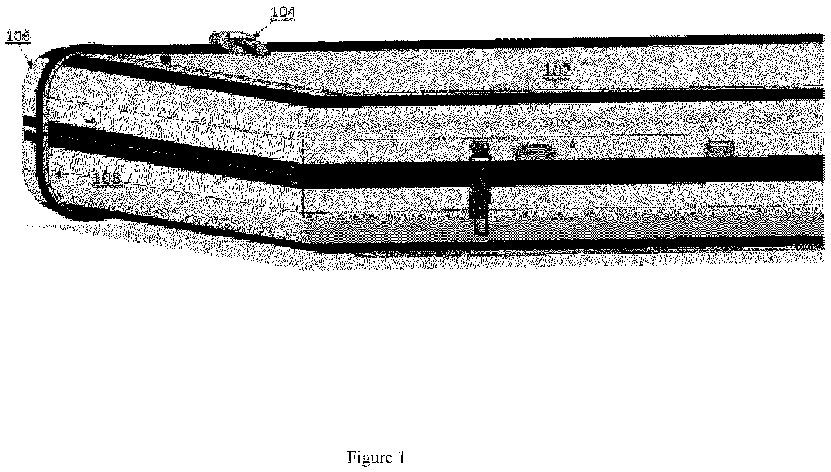

With reference to FIG. 1, system 100 is depicted which includes an outer hardshell 102, a support hinge 104, an endcap 106, a sealing profile 108, and a base 110. In some embodiments, the outer hardshell 102 may be securely affixed to a vehicle structure via a plurality of fasteners. In some embodiments, the outer hardshell 102 may be made of a material, but not limited to, a metal, a composite, a polymer, or other material having a rigid structure. For example, a material having light weight and sufficient strength to support multiple people may include an aluminum material having a honeycomb structure 120. In some embodiments, the outer hardshell 102 may have two or more parts that are configured to fold and unfold so as to have a folded mode and an unfolded mode. In the folded mode, the outer hardshell 102 may define a housing around a cavity within which other components may be held. The housing may have a shape having a length, a width and a height. When installed on a vehicle, the length of the housing may extend along a length of a roof of the vehicle or along a length of a bed of the vehicle (e.g., when mounted over the bed of a truck). When installed on a vehicle, the width of the housing may extend along a width of the vehicle and the height may extend in a direction vertically above the vehicle. Accordingly, when in the folded mode, the housing formed by the outer hardshell 102 may have a length and a width greater than the height.

The housing formed by the outer hardshell 102 in the folded mode may be enclosed by a top face, a bottom face, and sidewalls extending between the top face and the bottom face. The top face and the bottom face may include portions of the outer hardshell 102 that, when in the folded mode, extend in the length and width directions, while the sidewalls enclose the cavity between the top face and the bottom face by extending between edges of the top face and the bottom face. In some embodiments, the housing may include one or more sidewalls to create a partially or fully enclosed cavity.

In some embodiments, for weather resistance and the protection of components held within the cavity, the outer hardshell 102 may be shaped to create three sidewalls when in the folded mode, with the fourth edge of the top and/or bottom face being enclosed with the endcap 106. In some embodiments, the endcap 106 is connected to the outer hardshell 102 via the support hinge 104 on one end so as to overlap with the remainder of the outer hardshell 102 and ends at a similar angle as the remainder of the outer hardshell 102. In some embodiments, the endcap 106 may be lined with a double layer of the sealing profile 108. The first layer (i.e., gasket layer) of the sealing profile 108 may be secured, via an adhesive material, to an extrusion profile of the outer hardshell 102, where the adhesive material may be a glue, a cement, and/or a paste capable of forming an adhesive bond to the material of the extrusion profile.

In some embodiments, the support hinge 104 may refer to a double hinge configuration that includes a first hinge that allow the endcap 106 to partially open more than 90 degrees from the outer hardshell 102 and a second hinge that allows the endcap 106 to open further to a full 180 degrees and rest on the same plane as the outer hardshell 102. In some embodiments, the support hinge 104, with its double hinge configuration, allows for further support to the vehicle structure and prevents the endcap 106 from creating dents or holes in the vehicle structure. In some embodiments, the support hinge 104 may allow the endcap 106 and the outer hardshell 102 of the adjustable mobile structure to perform a self-closing mechanism, which directly relies on the use of the gas spring 112 to return the outer hardshell 102 and the endcap 106 to return to a closed position automatically. In certain embodiments, the support hinge 104 may utilize a bi-fold configuration that allows for panels of the outer hardshell to fold back on themselves and allows for optimal compact space. The bi-fold configuration may consist of two or more panels connected by hinges that fold back on each other, where the configuration may also refer to concealed hinges that become hidden within the outer hardshell 102 during folding and unfolding operations.

In some embodiments, the outer hardshell 102 is configured to conceal the fabric of the adjustable mobile structure. In some embodiments, the outer hardshell 102 may be a smooth and aerodynamic contour for reducing drag, wind noise, and undesired lift forces at speeds exceeding a particular threshold. In certain embodiments, the outer hardshell 102 is made of at least one material including, but not limited to, aluminum, titanium, and carbon fiber.

In some embodiments, a ladder is not required to initiate the adjustable mobile structure, where ladders are commonly configured to enable a user to deploy a mobile structure by pulling down after the endcap 106 and the outer hardshell 102 are opened. In some embodiments, the user may initiate the adjustable mobile structure via manipulating the base 110 with assistance of a gas spring 112, where the gas spring 112 allows the user to dynamically initiate the adjustable mobile structure without the requirement of a ladder. In some embodiments, an interior cable configuration 114 further allows for the user to dynamically initiate the adjustable mobile structure by distributing force evenly across the base 110 to ensure that entire force is not directed to a single point. In some embodiments, the sealing profile 108 associated with the adjustable mobile structure efficiently prevents water, dust, and other particulate matter from entering into the adjustable mobile structure.

In certain embodiments, the gas spring 112 may use compressed gas contained within a cylinder and sealed by a sliding piston to exert force, where the sliding piston moves within the cylinder and separates it into two chambers; a piston rod attached to the piston and extends out of a distal end of cylinder; one or more seals to prevent gas from escaping the cylinder and keeping the movement fluid; and the compressed gas (e.g., nitrogen) within the cylinder to provide force. In some embodiments, when the piston rod is pushed into the cylinder within the gas spring 112, the gas inside is compressed and creates pressure that acts against the piston to generate a force that pushes the rod out. In some embodiments, the piston of the gas spring 112 may include small orifices (i.e., valves) that control the flow of gas between the two chambers to create a damping effect, which controls the speed at which the piston rod extends or retracts. In certain embodiments, the force exerted by the gas spring 112 may be adjusted by changing the pressure of the compressed gas within the cylinder, thereby allowing for automatic initiation of the adjustable mobile structure. In certain embodiments, a plurality of gas springs 112 may be utilized within the adjustable mobile structure. In certain embodiments, the gas spring 112 may alternatively include a metal spring or an elastic component.

In certain embodiments, the gas spring 112 may be employed to assist in the opening of the tent. When in the folded mode, the outer hardshell 102 may include hinge at ends of two halves of the outer hardshell 102 such that the tent is deployed by rotating one half with respect to the other end about the hinge. Within the interior of the cavity defined by the outer hardshell 102 when in the folded mode, the gas spring 112 may be mounted to a frame on each half of the outer hardshell 102. The frame of each half may include a mounting point a distance from the hinge at the end of each half. The distance of the mounting point from the hinge may be different for each half. As a result, when in the folded mode, there is a first displacement between the mounting point of the first half and the mounting point of the second half. When the outer hardshell 102 is unfolded into the unfolded mode, the mounting point of the first half and the mounting point of the second half are rotated about the hinge relative to each other so as to increase the first displacement to a second displacement in the unfolded mode. As a result, the gas spring 112 can be mounted such that a first end of the gas spring 112 is mounted to the mounting point of the first half and a second end of the gas spring 112 is mounted to the mounting point of the second half. As a result, the gas spring 112 may be in a compressed state when the outer hardshell 102 is in the folded mode, and in an uncompressed state when the outer hardshell 102 is in the unfolded mode because of the increase in displacement between the mounting points when unfolded. Thus, the gas spring 112 can be configured with a piston stroke and a gas that results in a predetermined amount of force on the compressed gas in the cylinder of the gas spring 112. As a result, the force pushes to piston rod to extend, thereby causing the force to transfer via the piston rod into the frame so as to push the mounting points away from each other, thereby assisting in the unfolding of the outer hardshell 102. In some embodiments, the gas spring 112 may allow the user to open the adjustable mobile structure to a position just before 180 degrees, which provides additional support to a closing process, as the tent is already at an angle that provides momentum to close. In some embodiments, the gas spring 112, when compressed, may refer to a rest a position, where the piston rod is neither pushed nor pulled. This rest position occurs when the adjustable mobile structure is between being fully open position and a fully closed position, where the piston associated with the gas spring 112 may extend past the rest position when the adjustable mobile structure is in the open position. The piston extending past the rest position provides momentum to the gas spring 112 to assist when the closing process. In certain embodiments, the piston may be retracted past the rest position during the closed position providing momentum to the gas spring to assist in opening the adjustable mobile structure.

In certain embodiments, the adjustable mobile structure may utilize a plurality of hydraulic actuators to automatically perform the opening function of the adjustable mobile structure via receiving an electric signal to open from an external data source, where the external data source may refer to the dashboard of the vehicle, an application stored within a smart phone, and/or a button located within the outer hardshell 102. In some embodiments, the gas spring 112 contains a center hinge point that provides support in the dynamic opening of the adjustable mobile structure and automatic closing of the adjustable mobile structure.

In some embodiments, the sealing profile 108 may include a gasket 116 that contains an extension into the sealing profile, where the extension 118 prevents moisture, dust, or insects from entering the outer hardshell 102 of the adjustable mobile structure. In some embodiments, the gasket 116 may be configured to provide watertight and dust proof, thereby efficiently preventing water, dust, and other particulate matter from entering into the adjustable mobile structure. In some embodiments, the gasket 116 could be, but not limited, a rubber dust seal. There may be a clearance of 6-8 millimeters between the extension 118 on a bottom portion of the outer hardshell 102. The gasket 116 or rubber seal may be about 12 mm when engaged with the interior cable configuration 114 and there is 4-6 kPa of pressure applied to the gasket 116 ensuring the adjustable mobile structure is watertight and dust proof.

In some embodiments, the interior cable configuration 114 includes at least three points of connection with the outer hardshell 102 and the fabric portions of the adjustable mobile structure, where the points of connection may refer to one on each half of the outer hardshell 102 and one at a central support rod. In some embodiments, the interior cable configuration 114 may provide an increased strength, durability, stability, and longevity to the adjustable mobile structure. In some embodiments, the interior cable configuration 114 may be affixed to the outer hardshell 102 via an endpoint. The endpoint may be formed from one or more materials having a strength sufficient to support the tension in the cable when the outer hardshell 102 is unfolding and one or more people are in the tent. Thus, the endpoint may be formed from, e.g., steel, aluminum, carbon fiber, or other metal, composite, polymer or mixtures, alloys and/or combinations thereof. In some embodiments, the interior cable configuration 114 may provide support to the fabric portions of the adjustable mobile structure by running a cable from one end of the adjustable mobile structure to an opposite end of the adjustable mobile structure, where the cable flows through at least one support beams within the adjustable mobile structure. In certain embodiments, the interior cable configuration 114 may be adjustable, where a user may tighten or loosen a turnbuckle and/or tensioner connected to the cable. The adjusting of the interior cable configuration 114 may increase the height of the adjustable mobile structure or increase the load-bearing capacity of the adjustable mobile structure. In some embodiments, the steel of the interior cable configuration 114 and the cable may refer to galvanized or stainless steel to resist corrosion and provide high tensile strength. In some embodiments, the cable may be made of a metal or metal alloy (e.g., steel), a polymer, an aramid fiber, a natural fiber (e.g., cotton, hemp, leather, etc.), etc.

In some embodiments, the adjustable mobile structure may include a door and two windows, although other implementations are possible and contemplated. In some embodiments, the door may include a flap constructed of the same material as the adjustable mobile structure on the sides and may be openable and/or closeable via a zipper and/or clasps. In some embodiments, the windows may be constructed of mesh or clear plastic and may include a water-resistant membrane or flap to cover the windows for privacy or weather protection. In certain embodiments, a top portion of the adjustable mobile structure may be constructed of a lightweight or breathable material, such as mesh, while a bottom portion affixed to the outer hardshell 102 may be constructed of a heavier material (i.e., canvas) thereby providing privacy, durability, and breathability.

In some embodiments, the adjustable mobile structure may be remotely operated via an application stored on a computing device, namely a smart phone. In certain embodiments, the application may receive a request from a user via a programmable element within a graphical user interface; transmit the request to a trained machine learning module associated with the adjustable mobile structure; automatically initiate an opening of the an adjustable mobile structure, where the opening sends signals to each gas cylinder to push a piston rod via force of a compassed gas within the gas cylinder; automatically releasing a support hinge attached to an endcap of an outer hardshell to continuing the opening of the adjustable mobile structure; dynamically securing each end of a cable associated with an interior cable configuration, where the cable may be affixed to the outer hardshell via a turnbuckle and fed through a plurality of steel support beams; and attaching a ladder apparatus to the endcap of the outer shell, where the attachment of the ladder apparatus completes the opening by outer hardshell resting at a full 180 degrees. In some embodiments, the opening of the adjustable mobile structure may be manually performed by the user with the support of the gas cylinder. In some embodiments, the ladder apparatus may not be needed when the adjustable mobile structure is affixed to a vehicle structure at a height where the user can easily climb into the adjustable mobile structure. In certain embodiments, the user may unclasp the support hinge located on the endcap of the outer hardshell to initiate the opening of the adjustable mobile structure. In some embodiments, the user may initiate the closing of the adjustable mobile structure by lifting up on an end of the outer hardshell, where the gas spring dynamically compresses the adjustable mobile structure to fit within the outer hardshell; and secure the endcap via the support hinge to the outer hardshell.

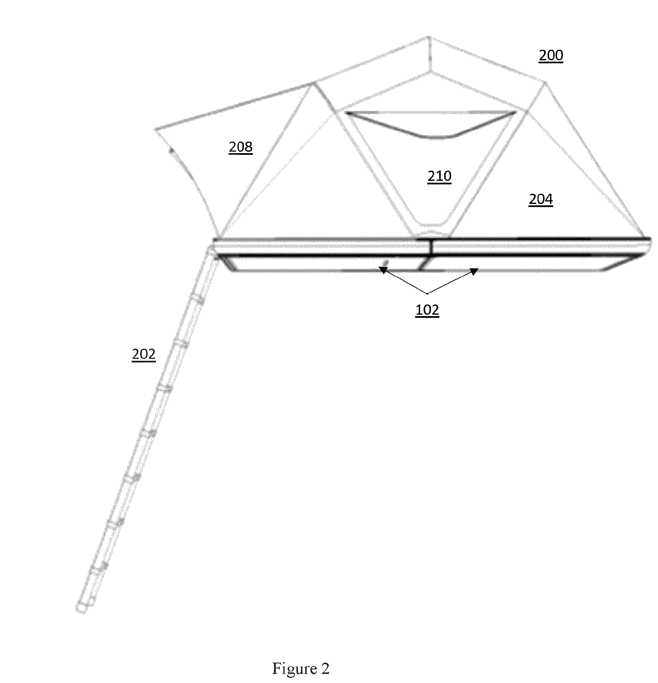

FIG. 2 depicts the adjustable mobile structure 200 in an open position with a ladder apparatus 202, in accordance with one or more embodiments of the present disclosure. In some embodiments, the adjustable mobile structure 200 includes the outer hardshell 102 and a top portion 204 that may be constructed of a lightweight or breathable material, such as mesh, while a bottom portion 206 affixed to the outer hardshell 102 may be constructed of a heavier material (i.e., canvas) thereby providing privacy, durability, and breathability. In some embodiments, the bottom portion 206 may refer to a base 110, which may serve as a mattress and/or floor when the user intends to use the adjustable mobile structure as a tent. In some embodiments, the ladder apparatus 202 may be utilized to complete the opening process of the adjustable mobile structure 200 or provide assistance to a user seeking to climb into the adjustable mobile structure. In some embodiments, the adjustable mobile structure 200 may include a door 208 and two windows 210, although other implementations are possible and contemplated. In some embodiments, the door 208 may include a flap constructed of the same material as the adjustable mobile structure 200 on the sides and may be openable and/or closeable via a zipper and/or clasps. In some embodiments, the windows 210 may be constructed of mesh or clear plastic and may include a water-resistant membrane or flap to cover the windows for privacy or weather protection.

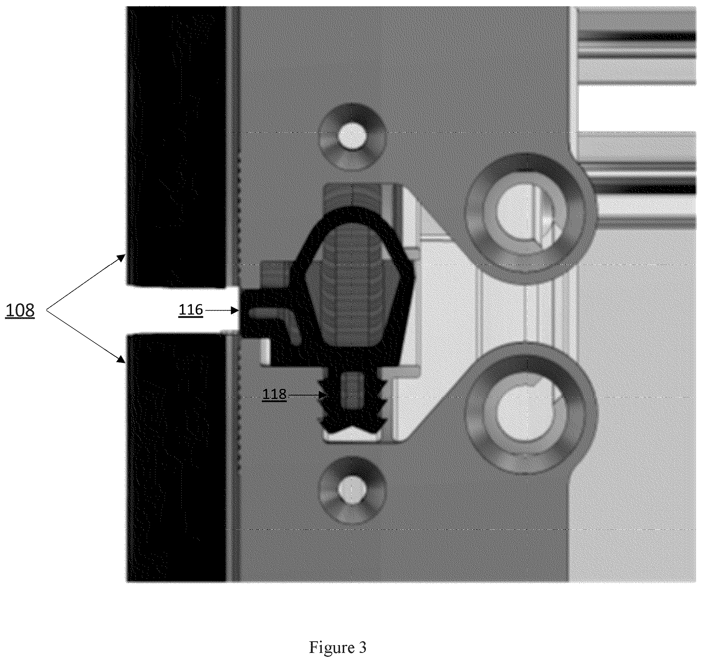

FIG. 3 depicts a gasket 116 associated with an internal flange 118 within a sealing profile 108, in accordance with one or more embodiments of the present disclosure. In some embodiments, the gasket 116 may be configured to provide watertight and dust proof, thereby efficiently preventing water, dust, and other particulate matter from entering into the adjustable mobile structure. In some embodiments, the gasket 116 could be, but not limited, a rubber dust seal. There may be a clearance of 6-8 millimeters between an internal flange 118 on a bottom portion of the outer hardshell 102. The gasket 116 or rubber seal may be about 12 mm when engaged with the interior cable configuration 114 and there is 4-6 mm of pressure applied to the gasket 116 ensuring the adjustable mobile structure is watertight and dust proof.

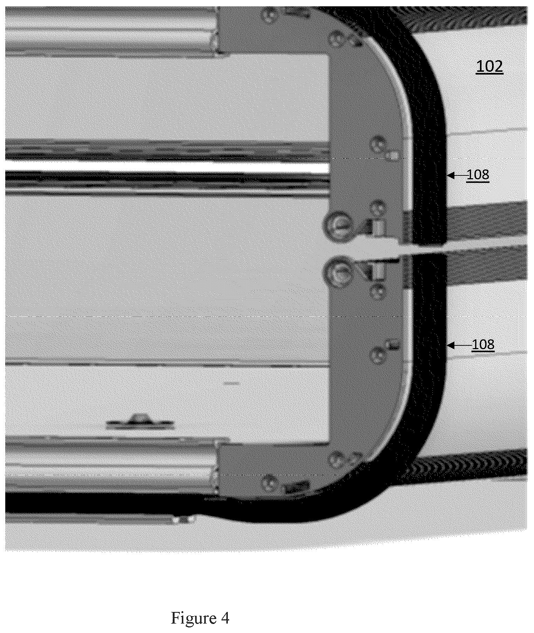

FIG. 4 depicts a cross-sectional view of the sealing profile 108, in accordance with one or more embodiments of the present disclosure. In some embodiments, the sealing profile 108 associated with the adjustable mobile structure 200 efficiently prevents water, dust, and other particulate matter from entering into the adjustable mobile structure 200. In some embodiments, the sealing profile 108 may refer a rubber material affixed to the seams, zippers, and openings of the adjustable mobile structure 200 to create tight seal. In certain embodiments, the sealing profile 108 may prevent an ingress of water, wind, dust, and insects, while maintain a controlled and comfortable interior environment. In some embodiments, the sealing profile 108 may be affixed to the adjustable mobile structure 200 via an adhesive-backed tape or glue that can be applied over the seams to block water from penetrating through holes. In some embodiments, the sealing profile 108 may be affixed to the adjustable mobile structure 200 via a welded seam that are heat-welded to provide a waterproof and durable seal without needle holes. In some embodiments, the sealing profile 108 may be affixed using a rubber or silicon gasket that compress to form a seal when the endcap 106 and outer hardshell 102 of the adjustable mobile structure 200 are in a closed position.

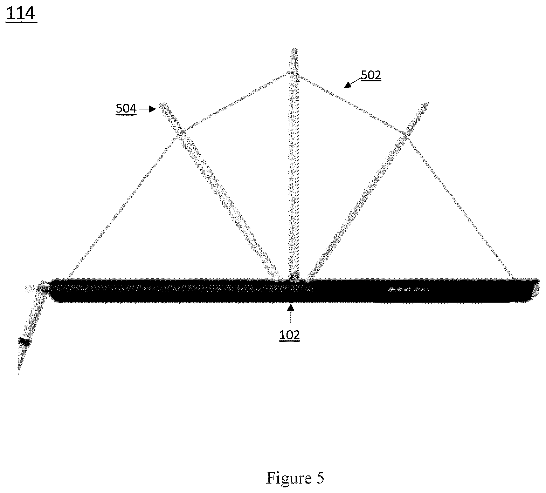

FIG. 5 depicts a cross-sectional view of the interior cable configuration 114, in accordance with one or more embodiments of the present disclosure. In some embodiments, an interior cable configuration 114 allows for the user to dynamically initiate the adjustable mobile structure 200 by distributing force evenly across the base 110 to ensure that entire force is not directed a single point. In some embodiments, the interior cable configuration 114 includes at least two points of connection with the outer hardshell 102 and the fabric portions of the adjustable mobile structure 200. In some embodiments, the interior cable configuration 114 may provide an increased strength, durability, stability, and longevity to the adjustable mobile structure 200. In some embodiments, the interior cable configuration 114 may provide support to the top portion 204 of the adjustable mobile structure 200 by running a cable 502 from one end of the adjustable mobile structure 200 to an opposite end of the adjustable mobile structure 200, where the cable 502 flows through at least one support beam 504 within the adjustable mobile structure 200. In certain embodiments, the interior cable configuration 114 may be adjustable, where a user may tighten or loosen a turnbuckle and/or tensioner connected to the cable 502. The adjusting of the interior cable configuration 114 may increase the height of the adjustable mobile structure 200 or increase the load-bearing capacity of the adjustable mobile structure 200. In some embodiments, the steel of the interior cable configuration 114 and the cable 502 may refer to galvanized or stainless steel to resist corrosion and provide high tensile strength.

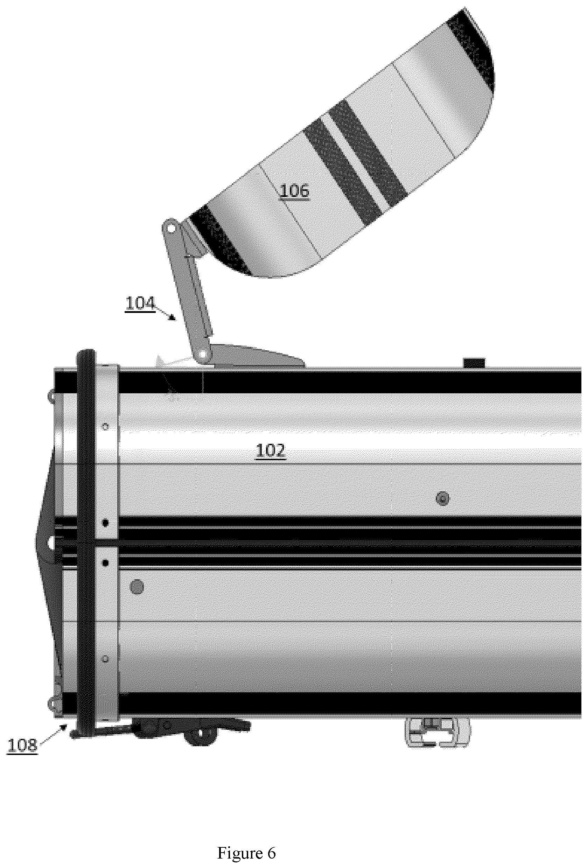

FIG. 6 depicts a support hinge 104 connected to the endcap 106 and the outer hardshell 102 in a partially open position, in accordance with one or more embodiments of the present disclosure. In some embodiments, the endcap 106 is connected to the outer hardshell 102 via the support hinge 104 on one end so as to overlap with the remainder of the outer hardshell 102 and ends at a similar angle as the remainder of the outer hardshell 102. In some embodiments, the support hinge 104 may refer to a double hinge configuration that includes a first hinge that allow the endcap 106 to open perpendicular to the outer hardshell 102. In some embodiments, the support hinge 104, with its double hinge configuration, allows for further support to the vehicle structure and prevents the endcap 106 from creating dents or holes in the vehicle structure. In some embodiments, the support hinge 104 may allow the endcap 106 and the outer hardshell 102 of the adjustable mobile structure to perform a self-closing mechanism, which directly relies on the use of the gas spring 112 to return the outer hardshell 102 and the endcap 106 to return to a closed position automatically.

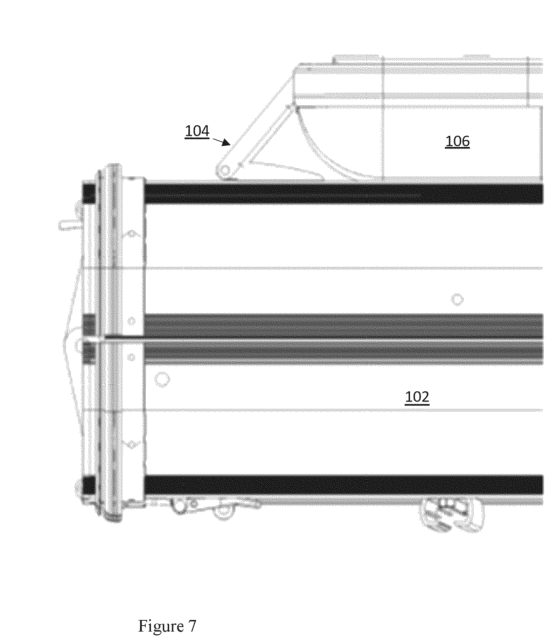

FIG. 7 depicts the support hinge 104 connected to the endcap 106 and the outer hardshell 102 in a fully open position, in accordance with one or more embodiments of the present disclosure. In some embodiments, the support hinge 104 may refer to a double hinge configuration that includes a second hinge that allows the endcap 106 to open further to a full 180 degrees and rest on the same plane as the outer hardshell 102. In certain embodiments, the support hinge 104 may utilize a bi-fold configuration that allows for panels of the outer hardshell 102 to fold back on themselves and allows for optimal compact space. The bi-fold configuration may consist of two or more panels connected by hinges that fold back on each other, where the configuration may also refer to concealed hinges that become hidden within the outer hardshell 102 during folding and unfolding operations.

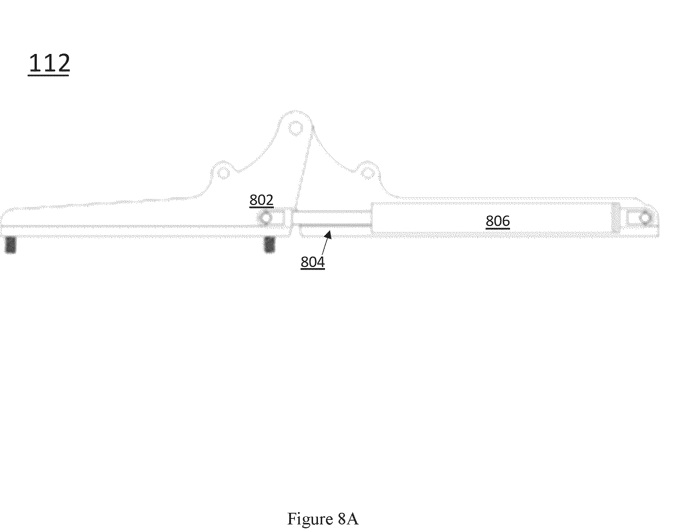

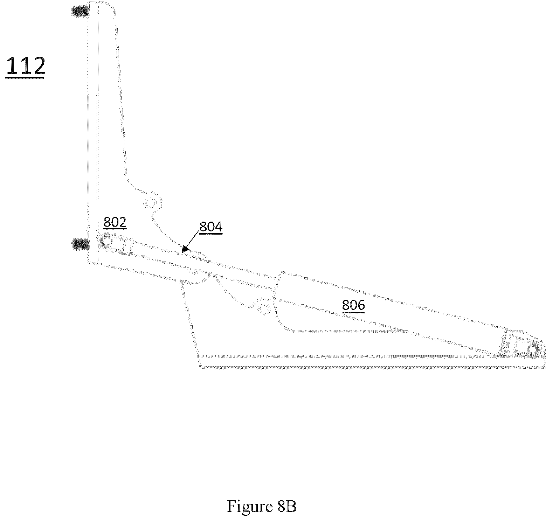

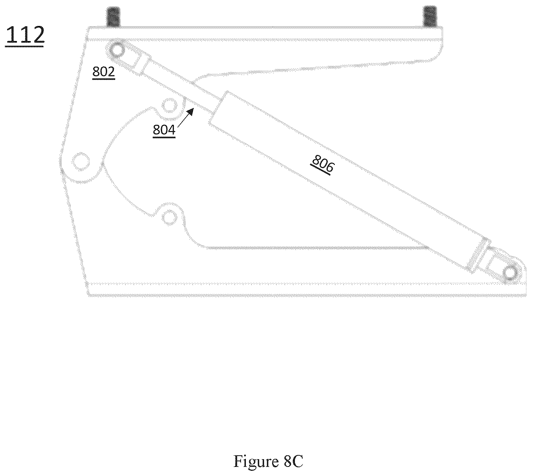

FIGs. 8A-8C depict the gas spring 112 in multiple positions, in accordance with one or more embodiments of the present disclosure. FIG. 8A depicts the gas spring 112 in a fully open position, where a center hinge point 802 is connected to one end of the piston rod 804 and the other end of the piston rod 804 is affixed to an end of the gas spring 112. In certain embodiments, the piston rod 804 may push a compressed gas within a gas cylinder 806 of the gas spring 112, where the pressure of pushing the compressed gas assists with the movement of the gas spring 112 in relation to the center hinge point 802. In some embodiments, the gas spring 112 prevents the tent from falling down when unfolding due to the installation position of the center hinge point 802. FIG. 8B depicts the gas spring 112 in a partially open position, specifically 90 degrees in relation to the adjustable mobile structure 202. In some embodiments, the gas spring 112 may automatically be able to achieve the partially open position from a fully open position and a fully closed position via the pressure being applied by the piston rod 804 to the center hinge point 802. FIG. 8C depicts the gas spring 112 in a closed position. In some embodiments, the gas spring 112 is in a folded configuration similar to the folded configuration of the outer hardshell 102 that houses the gas spring 112 within the cavity. In some embodiments, the portion of the gas spring 112 that contains the gas cylinder 806 remains stationary while the remaining portion of the gas spring 112 may move up and down in response to the piston rod 804.

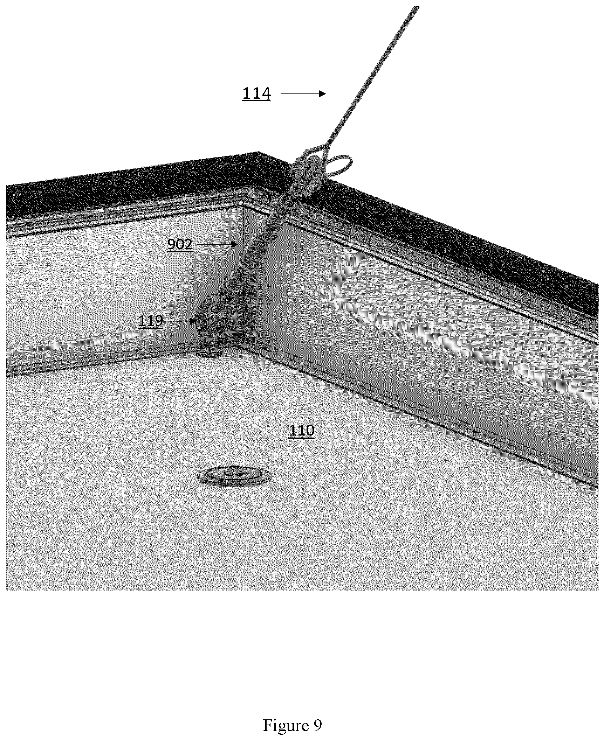

FIG. 9 illustrates an endpoint of the interior cable configuration 114, in accordance with one or more embodiments of the present disclosure. In some embodiments, the endpoint 902 of the interior cable configuration 114 may refer to the internal flange 119, as described above. In some embodiments, the endpoint securely connects the interior cable configuration 114 to the outer hardshell 102 through the base 110. In some embodiments, the endpoint 902 may refer to a mechanism that provides tensile strength to the cable of the interior cable configuration 114 and provides flexibility during opening and closing of the adjustable mobile structure 200.

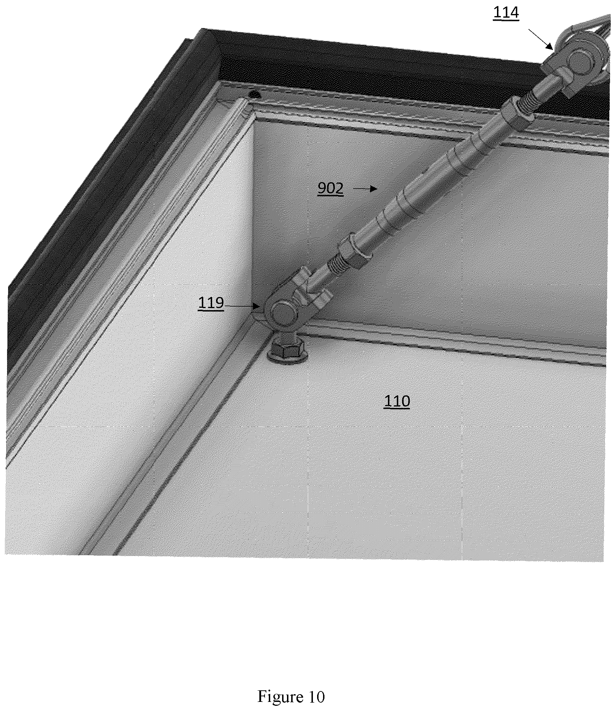

FIG. 10 illustrates the internal flange 119 configuration, in accordance with one or more embodiments of the present disclosure. In some embodiments, the internal flange 118 may be securely connected to the outer hardshell 102, through the base 110, via a washer and bolt. In certain embodiments, the internal flange 119 may be able to rotate 360 degrees when the endpoint 902 of the interior cable configuration 114 is not attached. In certain embodiments, the internal flange 119 may provide pressure to the endpoint 902 of the interior cable configuration 114 to tighten the cable within the adjustable mobile configuration 200 when in an open position.

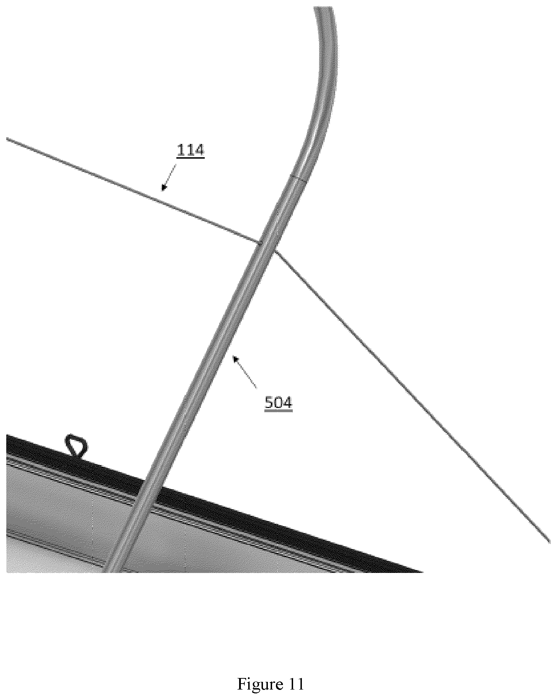

FIG. 11 illustrates a support beam 504 associated with an interior cable configuration 114, in accordance with one or more embodiments of the present disclosure. In some embodiments, the support beam 504 may contain a hole that the cable of the interior cable configuration 114 may be fed through. In certain embodiments, the support beam 504 may be made of any lightweight material that provides support (e.g., steel, aluminum, carbon fiber, or other metal, composite, polymer or mixtures, alloys and/or combinations thereof) to the adjustable mobile structure 200 in an open position.

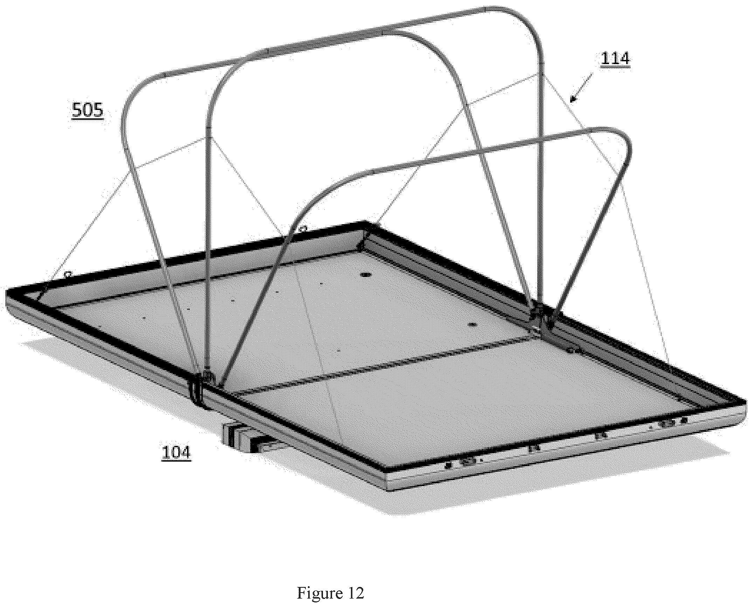

FIG. 12 illustrates a plurality of support beams 505 associated with an interior cable configuration 114, in accordance with one or more embodiments of the present disclosure. In some embodiments, the plurality of support beams 505 are integrated with the interior cable configuration 114. In some embodiments, the plurality of support beams 505 may include at least two support beams and provide support to the adjustable mobile structure 200 in an open position. In some embodiments, the cable associated with the interior cable configuration 114 may pass through each support beam of the plurality of support beams 505.

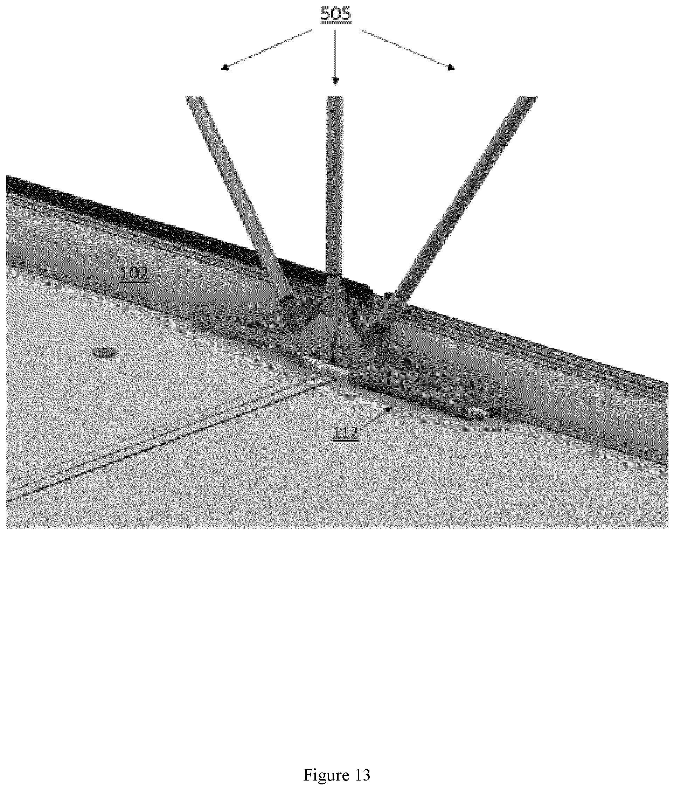

FIG. 13 illustrates a plurality of support beams 505 connected to a gas spring 112, in accordance with one or more embodiments of the present disclosure. In some embodiments, the plurality of support beams 505 are equidistant from the central hinge of the gas spring 112, which allows for each beam to share an equal amount of weight during the opening and closing of the adjustable mobile structure 200. In some embodiments, the gas spring 112 is affixed to the adjustable mobile structure 200 via the extrusion profile of the outer hardshell 102.

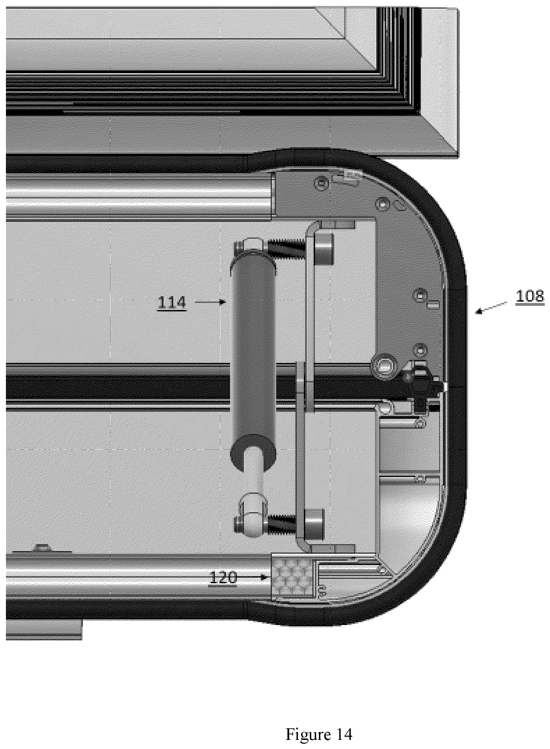

FIG. 14 illustrates a cross-sectional view of the gas spring 114 housed within the outer hardshell 102, in accordance with one or more embodiments of the present disclosure. In some embodiments, the gas spring 114 is affixed to the outer hardshell 102 via an extrusion profile. The extrusion profile may refer to an internal layer that provides an additional layer of prevention in addition to the sealing profile 108 that prevents liquid, dust, and/or insects from entering the adjustable mobile structure 200. In some embodiments, the extrusion profile contains a step-like structure to increase a functionality associated with the alignment of the outer hardshell 102 when fully open and closed, while also increases stability of the sealing profile 108 that is attached to the outer hardshell 102. In some embodiments, an adhesive material is utilized to secure the extrusion profile to the outer hardshell 102. In some embodiments, the step-like structure associated with the extrusion profile may include a honeycomb structure 120 affixed via the adhesive material (i.e., glue) that further connect the extrusion layer to the outer hardshell 102 within the adjustable mobile structure 200.

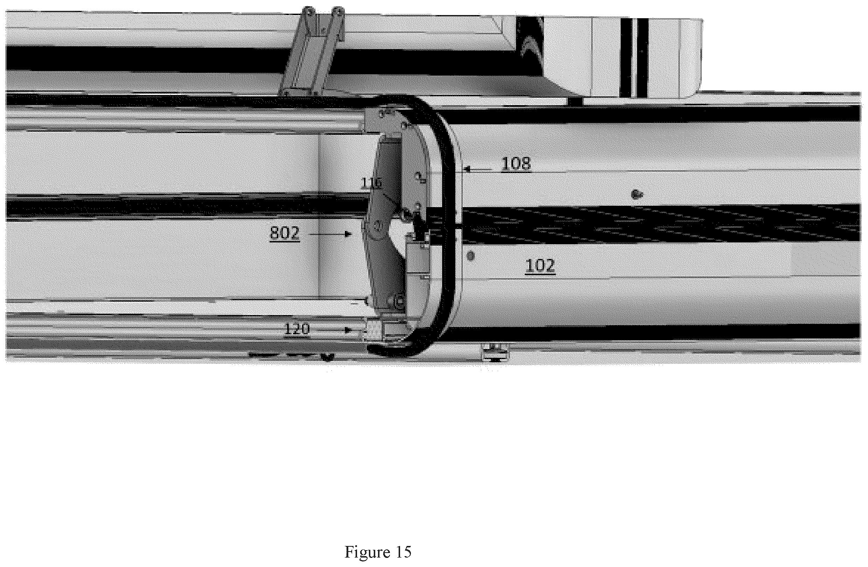

FIG. 15 illustrates an alternate cross-sectional view of the gas spring 112, in accordance with one or more embodiments of the present disclosure. In some embodiments, the center hinge point 802 of the gas spring 112 allows the adjustable mobile structure 200 to fully open and close without the requirement of a ladder apparatus 202. In some embodiments, the center hinge point 802 is visible when the endcap 106 of the outer hardshell 102 is open. In some embodiments, the gas spring 112 is affixed to the outer hardshell 102 via the extrusion profile, where the extrusion profile includes the honeycomb structure 120 for additional stability and optimized alignment. In some embodiments, the gasket 116 and extension 118 may be visible between the sealing profile 108 and the gas spring 112.

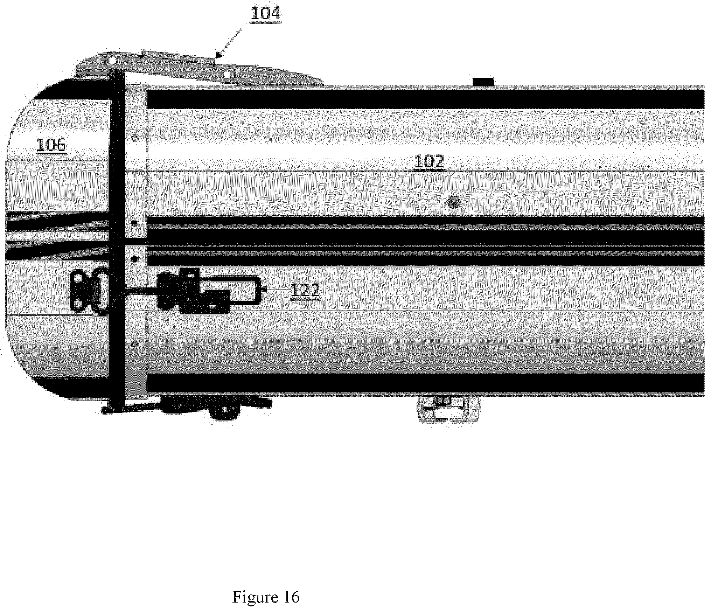

FIG. 16 illustrates a securing mechanism between the endcap 106 and the outer hardshell 102, in accordance with one or more embodiments of the present disclosure. In some embodiments, the securing mechanism 122 may refer to an external clasp that secures the endcap 106 to the outer hardshell 102 when fully closed. In some embodiments, the securing mechanism 122 may provide additional security to the endcap 106 being affixed to the outer hardshell 102 than the support hinge 104 alone.

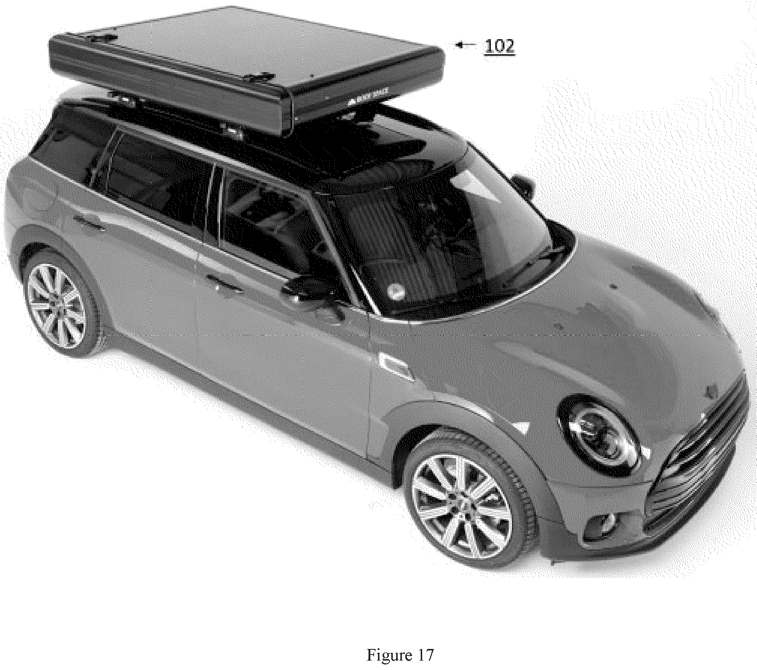

FIG. 17 illustrates an alternate view of an outer hardshell 102 of the adjustable mobile structure 200, in accordance with one or more embodiments of the present disclosure. In some embodiments, the outer hardshell 102 may be stored on the top of a vehicle, secured to a roof rack. The vehicle can be smaller than a traditional vehicle needed to support the weight of a tent due to the lightweight material of the outer hardshell 102 and the use of the gas spring 112 to remove force needed to open and close the adjustable mobile structure 200. In this embodiment, the adjustable mobile structure 200 is in a closed position.

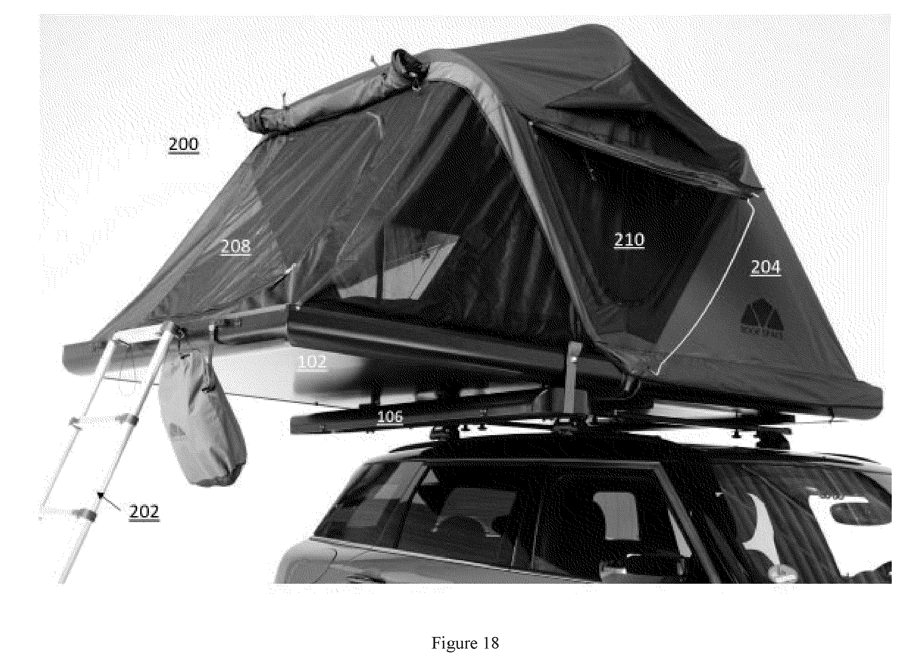

FIG. 18 illustrates an adjustable mobile structure 200 in an open position, in accordance with one or more embodiments of the present disclosure. In some embodiments, the adjustable mobile structure 200 includes the outer hardshell 102 and a top portion 204 that may be constructed of a lightweight or breathable material, such as mesh, while a bottom portion 206 affixed to the outer hardshell 102 may be constructed of a heavier material (i.e., canvas) thereby providing privacy, durability, and breathability. In some embodiments, the bottom portion 206 may refer to a base 110, which may serve as a mattress and/or floor when the user intends to use the adjustable mobile structure as a tent. In some embodiments, the ladder apparatus 202 may be utilized to complete the opening process of the adjustable mobile structure 200 or provide assistance to a user seeking to climb into the adjustable mobile structure. In some embodiments, the adjustable mobile structure 200 may include a door 208 and two windows 210, although other implementations are possible and contemplated. In some embodiments, the door 208 may include a flap constructed of the same material as the adjustable mobile structure 200 on the sides and may be openable and/or closeable via a zipper and/or clasps. In some embodiments, the windows 210 may be constructed of mesh or clear plastic and may include a water-resistant membrane or flap to cover the windows for privacy or weather protection.

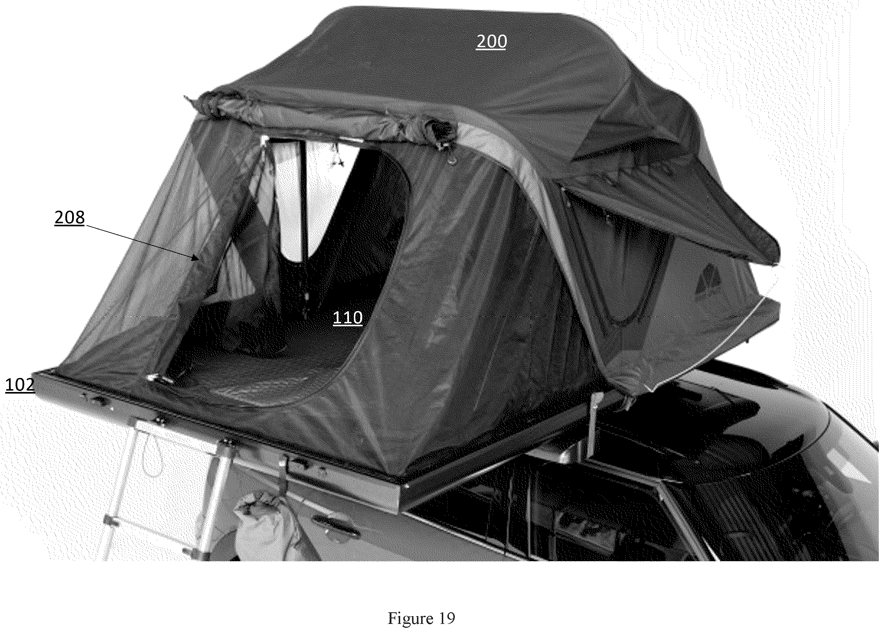

FIG. 19 illustrates a door 208 on the adjustable mobile structure 200 in an open position, in accordance with one or more embodiments of the present disclosure. In some embodiments, the door 208 may be unzipped to allow a user to enter into the adjustable mobile structure 200. In some embodiments, the door 208 provides additional protection from allowing moisture, dust, debris, or insects from entering the adjustable mobile structure 200. In some embodiments, the door 208 may be made of a breathable fabric (i.e., mesh) to allow wind to enter the adjustable mobile structure 200 but prevent insects from flying in.

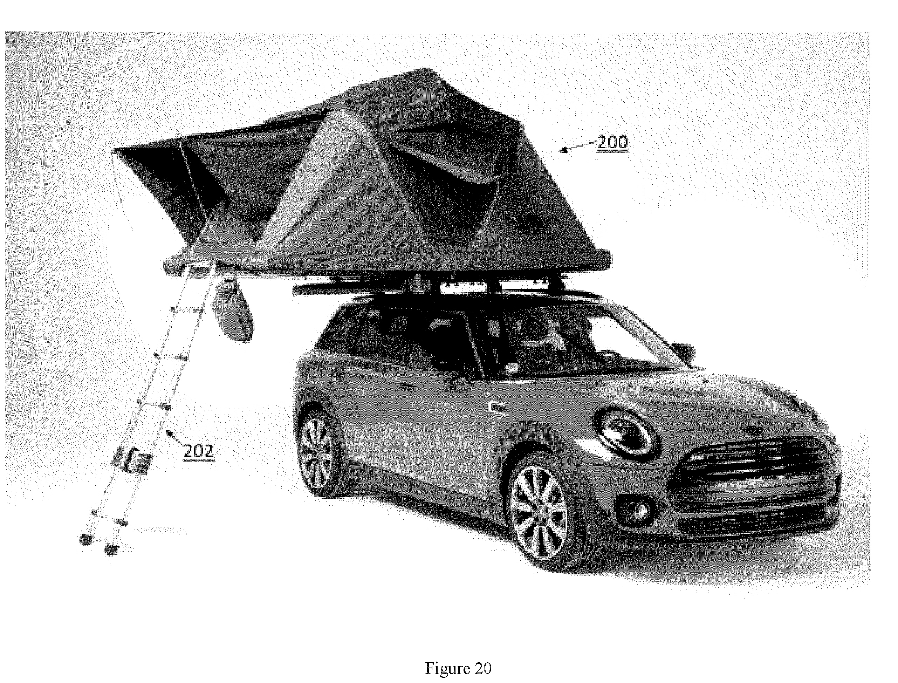

FIG. 20 illustrates an adjustable mobile structure 200 with an attached ladder apparatus 202, in accordance with one or more embodiments of the present disclosure. In some embodiments, the adjustable mobile structure 200, as described above, does not require the ladder apparatus 202 to initiate the opening process or finalize the closing process, as other roof tents require. In some embodiments, the ladder apparatus 202 may be securely affixed to the adjustable mobile structure 200 to ensure that a user may not misplace or lose the ladder apparatus 202 when not in use.

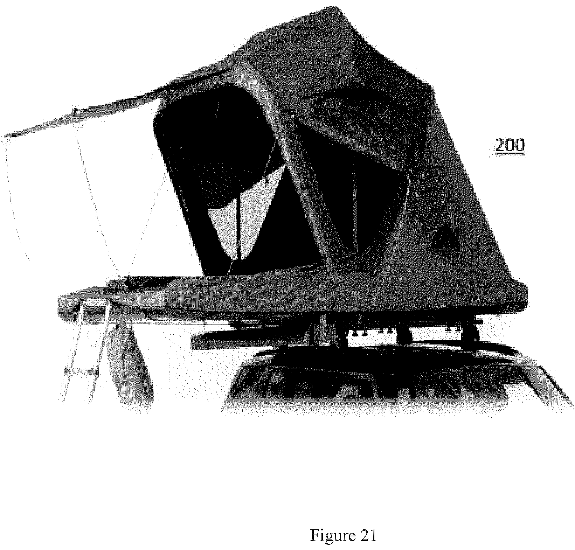

FIG. 21 illustrates an adjustable mobile structure 200 with an additional flap, in accordance with one or more embodiments of the present disclosure. In some embodiments, the adjustable mobile structure 200 may allow a user to securely affix the door 208 and the windows 210 to clasps to create a panoramic position. The panoramic position allows for a user to gather a larger range of view than would be available when the door 208 and the windows 210 of the adjustable mobile structure 200 are closed. In some embodiments, the cable associated with the interior cable configuration 114 may be visible when the adjustable mobile structure 200 is in the panoramic position.

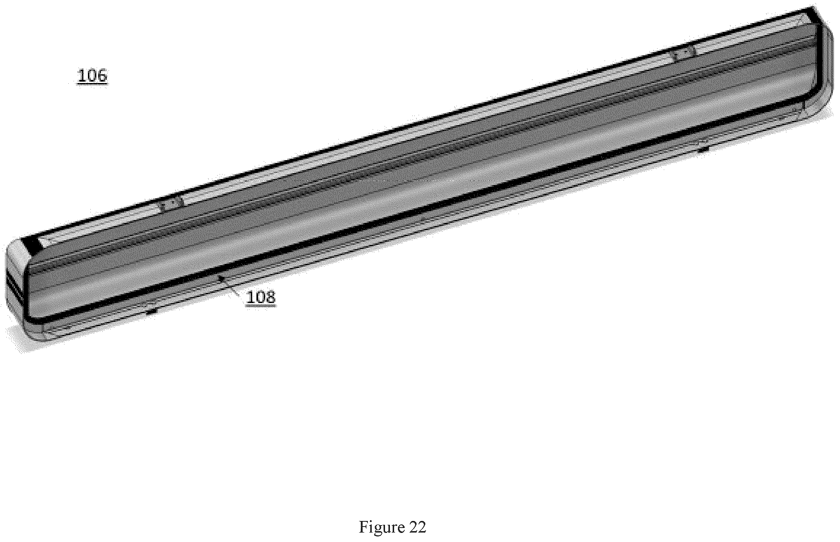

FIG. 22 illustrates an alternate view of the endcap 106, in accordance with one or more embodiments of the present disclosure. In some embodiments, the endcap 106 may contain at least one layer of the sealing profile 108 and a layer of the extrusion profile associated with the outer hardshell 102. In some embodiments, the endcap 106 may utilize the sealing profile 108 and extrusion profile to prevent water, dust, or insects from entering the adjustable mobile structure 200 when the endcap 106 is not secured to the outer hardshell 102.

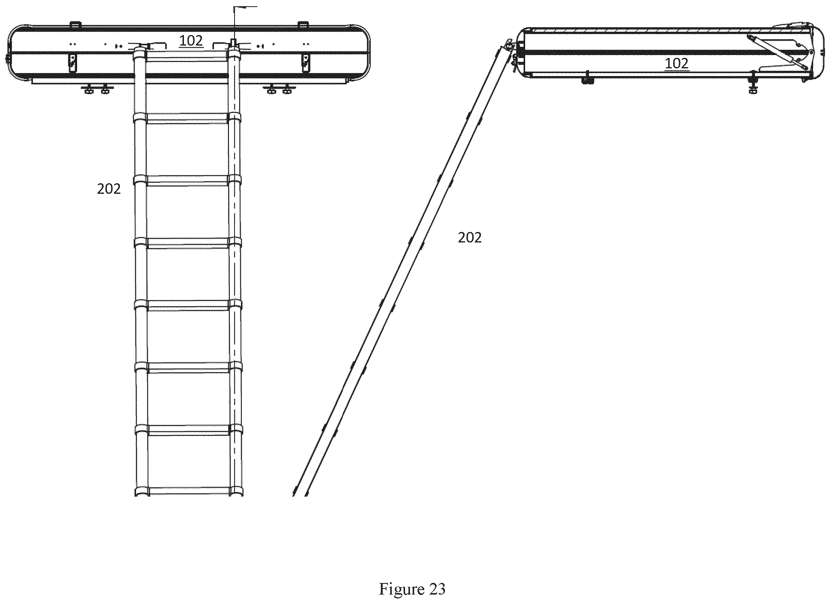

FIG. 23 illustrates an exemplary ladder apparatus 202 attached to an affixed handle via a locking mechanism 230, in accordance with one or more embodiments of the present disclosure. In some embodiments, the ladder apparatus 202 may include rungs extending horizontally between vertical legs. In some embodiments, the exemplary ladder apparatus 202 may be securely fastened to the affixed handle, where the handle is affixed to the outer hardshell 102 of the adjustable mobile structure 200. In certain embodiments, the ladder apparatus 202 may be made of aluminum, fiberglass, wood, steel, plastic, and/or a combination of materials. In some embodiments, the ladder apparatus 202 may be fastened to the handle via screws, nails, bolts, clamps, latches, and/or a combination thereof. In certain embodiments, the ladder apparatus 202 may be adhered to the handle via glue, epoxy, tape, and/or a combination thereof. In certain embodiments, the ladder apparatus 202 may be permanently affixed to the handle via welding techniques. For example, the affixed handle may be centered between the one or more support hinges 104 and made of the same material as the outer hardshell 102 to ensure the affixed handle remains as sturdy as the outer hardshell 102. In certain embodiments, the handle may be offset from a central axis of the outer hardshell 102.

In some embodiments, the ladder apparatus 202 may provide support to an individual to climb and enter the adjustable mobile structure 200. The ladder apparatus 202 may be collapsible, where each horizontal section may be stacked to remove space between and the vertical portions house each other to form a collapsible ladder apparatus. For example, the ladder may have telescoping segments. In certain embodiments, the collapsible ladder apparatus may reduce the weight and storage space required for the ladder apparatus 202 if unbale to be collapsed. In some embodiments, the locking mechanism 230 may include a dog leg, where a dog leg may refer to an enlarged portion of the mechanism that fastens around a center piece and creates a natural fastening mechanism. In some embodiments, the locking mechanism 230 may be affixed to the end of the ladder apparatus 202 to allow for the ladder apparatus to securely fasten to the handle of the outer hardshell 102 of the adjustable mobile structure.

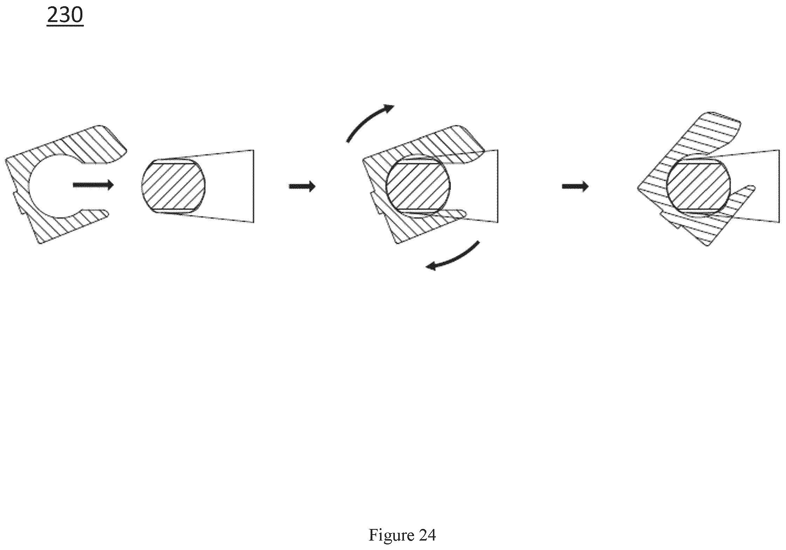

FIG. 24 illustrates the locking mechanism 230 encapsulating a handle affixed to an adjustable mobile structure 200, in accordance with one or more embodiments of the present disclosure. In some embodiments, the locking mechanism 230 may be made of a similar or different material to the ladder apparatus 202 and/or the outer hardshell 102. For example, the locking mechanism 230 may be made of a plastic, polymer, composite, metal and/or carbon fiber.

In some embodiments, the locking mechanism may be affixed to a distal end of the ladder apparatus 202, where the particular structure of the locking mechanism 230 may allow the ladder apparatus 202 to securely fasten to the handle affixed to the outer hardshell 102 by approaching the handle at a particular angle where the dog leg of the locking mechanism 230 encapsulates the handle. In some embodiments, the ladder apparatus 202 may be locked into place by twisting the locking mechanism in a particular direction once the dog leg of the locking mechanism encapsulates the handle, where the handle may remain within an interior cavity of the locking mechanism to ensure the ladder apparatus 202 cannot be released. In certain embodiments, the ladder apparatus 202 may be detached from the handle by twisting the locking mechanism 230 in the opposite direction that securely fastening the ladder apparatus 202 to the handle.

In some embodiments, the locking mechanism may include two members, each having a shape that, together, define an interior cavity. The two members of the locking mechanism as are shaped so as to define the interior cavity that is circular in cross section with an opening between the interior cavity and an exterior of the locking mechanism, as depicted in FIG. 24A. The opening may be defined two walls, each wall being formed by a respective end of a respective one of the two members. In some embodiments, the two walls may be separated by a distance less than a diameter of the interior cavity.

In some embodiments, the handle may have at least a portion which is shaped so as to fit through the opening of the locking mechanism and inserted into the interior cavity. The shape of the portion of the handle may mate with the interior cavity. For example, the portion of the handle may have a cross sectional shape defined by a perimeter with two parallel sides. The two parallel sides may define a cross-sectional width across the portion of the handle that matches a distance between the walls of the opening of the locking mechanism such that the portion of the handle may fit through the opening when the parallel sides of the portion of the handle are aligned with the walls of the opening of the locking mechanism.

In some embodiments, when the handle is inserted through the opening of the locking mechanism, the cross-sectional shape of the portion of the handle may be configured such that the portion of the handle may be locked within the interior cavity when the locking mechanism and/or the handle is rotated such that the parallel sides of the portion of the handle are brought out of alignment with the walls of the opening of the locking mechanism. Indeed, in some embodiments, the parallel sides of the portion of the handle may each have a first end and a second end, where the distance from the first end to the second end defines a cross-sectional width of the parallel sides of the portion of the handle. In some embodiments, the cross-sectional width of each parallel side may be sized such that a diagonal distance from the first end of one parallel side to the second end of a second parallel side exceeds the distance between the walls of the opening.

Thus, when rotated within the interior cavity, the portion of the handle may be locked into the locking mechanism.

In some embodiments, distance between the parallel sides of the portion of the handle may be any distance that is less than or equal to the distance between the walls of the opening of the locking mechanism, and the cross-sectional width of the each parallel side and/or the diagonal distance may be any size greater than the distance between the walls of the opening of the locking mechanism but less than or equal to the diameter of the interior cavity. For example, the parallel sides of the portion of the handle may have a cross sectional width that matches a chord of the circular cross section of the interior cavity of the locking mechanism such that when the portion of the handle is inserted through the opening, the parallel sides may fit within interior cavity to enable the portion of the handle to rotate within the interior cavity.

In some embodiments, to facilitate greater stability of the ladder attachment when the portion of the handle is locked within the locking arrangement, the perimeter of the cross-section of the portion of the handle may be further defined by curved sides spanning between the parallel sides. The curved sides may have a curvature matching a curvature of the interior cavity of the locking mechanism such that the curved sides conform to the interior cavity. For example, the cross-section of the portion of the handle may be a circle having a diameter matching the circular shape of the interior cavity, but with the two parallel sides defining respective secants of the circle. Thus, the two parallels sides are spaced to fit through the opening when aligned with the opening, but at another alignment the portion does not fit through the opening.

In some embodiments, the geometry of the ladder attachment, including the shape of the interior cavity and the walls of the opening, and/or the geometry of the portion of the handle, including the parallel sides, may be configured to allow the portion of the handle to fit through the opening of the locking attachment when the ladder is at a predetermined angle relative to the handle. The predetermined angle may be a specific angle, or may be a range of angles. For example, the predetermined angle may be, without limitation, 45 degrees, 50 degrees, 55 degrees, 60 degrees, 75 degrees, 80 degrees, 85 degrees, or any other angle in a range of about 40 degrees to 90 degrees. In some embodiments, the predetermined angle may include a tolerance of variation in the predetermined, the tolerance defining a range of angles around the predetermined angle within which the portion of the ladder may still enter the opening. For example, the tolerance may include, without limitation, ±1, ±2, ±3, ±4, ±5, ±6, ±7, ±8, ±9, ±10 or more degrees. Thus, when the ladder is held in an orientation relative to the handle that matches the predetermined angle plus or minus the tolerance, the portion of the handle may fit through the opening of the ladder attachment. Outside of the predetermined angle, plus or minus the tolerance, the portion of the handle may be unable to pass through opening of the ladder attachment and thus may be locked into or out of the ladder attachment.

The present disclosure has been described with reference to the accompanying drawings, which form a part hereof, and which show, by way of non-limiting illustration, certain example embodiments. Subject matter may, however, be embodied in a variety of different forms and, therefore, covered or claimed subject matter is intended to be construed as not being limited to any example embodiments set forth herein; example embodiments are provided merely to be illustrative. Likewise, a reasonably broad scope for claimed or covered subject matter is intended. Among other things, for example, subject matter may be embodied as methods, devices, components, or systems. Accordingly, embodiments may, for example, take the form of hardware, software, firmware or any combination thereof (other than software per se). The following detailed description is, therefore, not intended to be taken in a limiting sense.

Throughout the specification and claims, terms may have nuanced meanings suggested or implied in context beyond an explicitly stated meaning. Likewise, the phrase "in some embodiments" as used herein does not necessarily refer to the same embodiment and the phrase "in another embodiment" as used herein does not necessarily refer to a different embodiment. It is intended, for example, that claimed subject matter include combinations of example embodiments in whole or in part.

In general, terminology may be understood at least in part from usage in context. For example, terms, such as "and", "or", or "and/or," as used herein may include a variety of meanings that may depend at least in part upon the context in which such terms are used. Typically, "or" if used to associate a list, such as A, B or C, is intended to mean A, B, and C, here used in the inclusive sense, as well as A, B or C, here used in the exclusive sense. In addition, the term "one or more" as used herein, depending at least in part upon context, may be used to describe any feature, structure, or characteristic in a singular sense or may be used to describe combinations of features, structures or characteristics in a plural sense. Similarly, terms, such as "a," "an," or "the," again, may be understood to convey a singular usage or to convey a plural usage, depending at least in part upon context. In addition, the term "based on" may be understood as not necessarily intended to convey an exclusive set of factors and may, instead, allow for existence of additional factors not necessarily expressly described, again, depending at least in part on context.

The present disclosure has been described with reference to block diagrams and operational illustrations of methods and devices. It is understood that each block of the block diagrams or operational illustrations, and combinations of blocks in the block diagrams or operational illustrations, can be implemented by means of analog or digital hardware and computer program instructions. These computer program instructions can be provided to a processor of a general purpose computer to alter its function as detailed herein, a special purpose computer, ASIC, or other programmable data processing apparatus, such that the instructions, which execute via the processor of the computer or other programmable data processing apparatus, implement the functions/acts specified in the block diagrams or operational block or blocks. In some alternate implementations, the functions/acts noted in the blocks can occur out of the order noted in the operational illustrations. For example, two blocks shown in succession can in fact be executed substantially concurrently or the blocks can sometimes be executed in the reverse order, depending upon the functionality/acts involved.

For the purposes of this disclosure, a non-transitory computer readable medium (or computer-readable storage medium/media) stores computer data, which data can include computer program code (or computer-executable instructions) that is executable by a computer, in machine readable form. By way of example, and not limitation, a computer readable medium may comprise computer readable storage media, for tangible or fixed storage of data, or communication media for transient interpretation of code-containing signals. Computer readable storage media, as used herein, refers to physical or tangible storage (as opposed to signals) and includes without limitation volatile and non-volatile, removable and non-removable media implemented in any method or technology for the tangible storage of information such as computer-readable instructions, data structures, program modules or other data. Computer readable storage media includes, but is not limited to, RAM, ROM, EPROM, EEPROM, flash memory or other solid state memory technology, optical storage, cloud storage, magnetic storage devices, or any other physical or material medium which can be used to tangibly store the desired information or data or instructions and which can be accessed by a computer or processor.

To the extent the aforementioned implementations collect, store, or employ personal information of individuals, groups, or other entities, it should be understood that such information shall be used in accordance with all applicable laws concerning the protection of personal information. Additionally, the collection, storage, and use of such information can be subject to the consent of the individual to such activity, for example, through well known "opt-in" or "opt-out" processes as can be appropriate for the situation and type of information. Storage and use of personal information can be in an appropriately secure manner reflective of the type of information, for example, through various access control, encryption, and anonymization techniques (for especially sensitive information).

In the preceding specification, various example embodiments have been described with reference to the accompanying drawings. However, it will be evident that various modifications and changes may be made thereto, and additional embodiments may be implemented without departing from the broader scope of the disclosed embodiments as set forth in the claims that follow. The specification and drawings are accordingly to be regarded in an illustrative rather than restrictive sense.

At least some aspects of the present disclosure will now be described with reference to the following numbered clauses.

Clause 1. An adjustable mobile structure system including: an outer hardshell having two halves connected on a first side by at least one support hinge, a handle on a second side opposite the first side, the handle having a cross-sectional shape defined by a perimeter with two parallel sides and a cross-sectional width having an outward facing curve; and a removable ladder apparatus having a locking mechanism affixed to a distal end of the removable ladder apparatus, the locking mechanism configured to secure a connection between the removable ladder apparatus and the handle, where the locking mechanism includes at least two members, each member having a shape to form a circular interior cavity capable of matching a curvature of the handle.

Clause 2. The system according to clause 1, where the outer hardshell encompasses the entire adjustable mobile structure system.

Clause 3. The system according to clause 1 or 2, where the outer hardshell includes a material having a rigid structure capable of preventing moisture leakage.

Clause 4. The system according to clause 1, 2 or 3, where the at least one support hinge includes a double hinge configuration.

Clause 5. The system according to clause 1, 2, 3 or 4, where the handle is affixed to the second side via an adhesive material.

Clause 6. The system according to clause 1, 2, 3, 4 or 5, where the removable ladder apparatus is made of an aluminum alloy.

Clause 7. The system according to clause 1, 2, 3, 4, 5 or 6, where the removable ladder apparatus includes a plurality of telescoping segments capable of collapsing in a vertical configuration.

Clause 8. The system according to clause 1, 2, 3, 4, 5, 6 or 7, further including at least two support hinges, each support hinge of the at least two support hinges include a double hinge.

Clause 9. The system according to clause 1, 2, 3, 4, 5, 6, 7, or 8, further including an endcap connecting the two halves of the outer hardshell via the at least one support hinge.

Clause 10. The system according to clause 1, 2, 3, 4, 5, 6, 7, 8 or 9, further including a sealing profile attached to an interior portion of the outer hardshell via an adhesive material, the sealing profile including at least one gasket and capable of providing leakage protection to the outer hardshell.

## Claims

1. An adjustable mobile structure system comprising:
- an outer hardshell having two halves connected on a first side by at least one support hinge,
- a handle on a second side opposite the first side, the handle having a cross-sectional shape defined by a perimeter with two parallel sides and a cross-sectional width having an outward facing curve; and
- a removable ladder apparatus having a locking mechanism affixed to a distal end of the removable ladder apparatus, the locking mechanism configured to secure a connection between the removable ladder apparatus and the handle,
wherein the locking mechanism comprising at least two members, each member having a shape to form a circular interior cavity capable of matching a curvature of the handle.

2. The system of claim 1,
wherein the outer hardshell encompasses the entire adjustable mobile structure system.

3. The system of claim 1 or 2,
wherein the outer hardshell comprises a material having a rigid structure capable of preventing moisture leakage.

4. The system of one of claims 1 to 3,
wherein the at least one support hinge comprises a double hinge configuration.

5. The system of one of claims 1 to 4,
wherein the handle is affixed to the second side via an adhesive material.

6. The system of one of claims 1 to 5,
wherein the removable ladder apparatus is made of an aluminum alloy.

7. The system of one of claims 1 to 6,
wherein the removable ladder apparatus comprises a plurality of telescoping segments capable of collapsing in a vertical configuration.

8. The system of one of claims 1 to 7,
further comprising at least two support hinges, each support hinge of the at least two support hinges comprise a double hinge.

9. The system of one of claims 1 to 8, further comprising
- an endcap connecting the two halves of the outer hardshell via the at least one support hinge.

10. The system of one of claims 1 to 9,
further comprising a sealing profile attached to an interior portion of the outer hardshell via an adhesive material, the sealing profile comprising at least one gasket and capable of providing leakage protection to the outer hardshell.
